# EUROPÄISCHE PATENTSCHRIFT

(11) **EP 2 504 405 B1**
(45) Veröffentlichungstag und Bekanntmachung des Hinweises auf die Patenterteilung: **18.02.2015**
(21) Anmeldenummer: 10782555.6
(22) Anmeldetag: 19.11.2010
(51) Int. Cl.: C09J 7/02, G09F 3/00, B32B 7/06

(54) **TRENNFOLIE MIT SCHAUMSTRUKTUR**
RELEASE LINER WITH FOAM STRUCTURE
PAPIER ANTIADHESIF AYANT UNE STRUCTURE MOUSSE

(30) Priorität: 24.11.2009 DE 102009054322
(43) Veröffentlichungstag der Anmeldung: 03.10.2012
(73) Patentinhaber: Huhtamaki Films Germany GmbH & Co. KG, 91301 Forchheim (DE)
(72) Erfinder: ENGELHARD, Heinz, 90427 Nürnberg (DE); FÜRST, Michael, 91332 Heiligenstadt (DE); PANHANS, Jürgen, 91056 Erlangen (DE); MAUSER, Matthias, 91353 Hausen (DE)
(74) Vertreter: Kutzenberger, Helga
(86) Internationale Anmeldenummer: PCT/EP2010/007032
(87) Internationale Veröffentlichungsnummer: WO 2011/063914

(56) Entgegenhaltungen:
- EP-A2- 0 257 984
- DE-A1- 2 302 217
- US-A1- 2005 003 216
- US-A1- 2007 224 378
- DATABASE WPI Week 200745 Thomson Scientific, London, GB; AN 2007-461759 XP002626021, & JP 2007 069380 A (NITTO DENKO CORP) 22. März 2007 (2007-03-22)

## Beschreibung

Die vorliegende Erfindung betrifft eine Trennfolie umfassend wenigstens eine Schicht (s) mit einer geschlossenzelligen Schaumstruktur basierend auf wenigstens einem thermoplastischen Polymeren, wobei zumindest eine der Oberflächen der Trennfolie mit einer Releaseschicht (b) als Außenschicht basierend auf wenigstens einem ausgehärteten Polysiloxan ausgerüstet ist, und die geschlossenzellige Schaumstruktur auf expandierten, hohlen, kugelförmigen Mikroteilchen beruht, deren Expansion durch wenigstens eine, darin enthaltenden, leicht flüchtige, organische Verbindung erreicht wurde, eine Verwendung einer solchen Trennfolie als ablösbare Schutz- und Abdeckfolie sowie eine Dachbahn versehen mit einer solchen Trennfolie als ablösbare Schutz- und Abdeckfolie.

Trennfolien werden vielfach als abziehbare Schutzfolien für Klebebänder oder Selbstklebeetiketten eingesetzt, um ein Verkleben dieser einseitig oder beidseitig klebenden Produkte bei der Lagerung zu verhindem. Außerdem müssen sie eine hinreichende Trennwirkung gegen Klebstoffe aufweisen.

Aus dem Stand der Technik wie z.B. aus EP 1 277 802 A1 oder EP 0 769 540 A2 sind bereits Trennfolien bekannt, die zur Erzielung einer guten Trennwirkung zumindest einseitig silikonisiert sind.

Für einige technische Anwendungen, bei denen auch bei Umgebungstemperatur bereits stark klebende Materialien mit einer abziehbaren Schutzfolie ausgerüstet werden müssen, kann die Trennwirkung der bekannten Trennfolien jedoch nicht ausreichen, so dass es bei der Handhabung entsprechender klebefähiger Artikel, insbesondere bei der Entfernung der Trennfolie zu Schwierigkeiten beim Abziehen kommt.

Eine Verbesserung der Trennwirkung herkömmlicher Trennfolien gegenüber solchen stark klebenden Materialien wird gemäß dem Stand der Technik dadurch versucht, dass die Trennfolien mit einer Prägestruktur ausgerüstet werden. Nachteilig bei einer solchen Ausrüstung mit Prägestruktur ist für die Trennwirkung, dass die Prägestruktur unter Druckeinwirkung wie z.B. in einem aufgerollten Zustand, unter Zugbelastung und/oder unter thermischer Belastung wie z.B. bei weiteren Verarbeitungsschritten Schaden nehmen kann und die Trennfolie zumindest an den geschädigten Stellen eine ungenügende Trennwirkung aufweist.

Es besteht daher ein Bedarf an Trennfolien, die insbesondere eine sehr gute Trennwirkung gegenüber stark klebenden Materialien aufweisen, ohne dass die Trennfolie mit einer Prägestruktur ausgerüstet ist.

Aufgabe der vorliegenden Erfindung war es daher, Trennfolien ohne eine Prägestruktur-Ausrüstung zur Verfügung zu stellen, die sich durch eine verbesserte Trennwirkung gegenüber Klebstoffen und/oder klebefähigen Materialien, die bereits bei Umgebungstemperatur eine große Klebekraft aufweisen, auszeichnen.

Diese Aufgabe wird durch die Bereitstellung einer Trennfolie umfassend wenigstens eine Schicht (s) mit geschlossenzelliger Schaumstruktur basierend auf wenigstens einem thermoplastischen Polymeren, wobei die geschlossenzellige Schaumstruktur auf expandierten, hohlen Mikroteilchen beruht, deren Expansion durch wenigstens eine im Hohlraum der Mikroteilchen enthaltenen, leicht flüchtigen, organischen Verbindung erreicht wurde, und wobei zumindest eine der Oberflächen der Trennfolie mit einer Releaseschicht (b) als Außenschicht basierend auf wenigstens einem ausgehärteten Polysiloxan ausgerüstet ist.

Die Schicht (s) der erfindungsgemäßen Trennfolie basiert auf wenigstens einem thermoplastischen Polymer ausgewählt aus der Gruppe umfassend Olefin-Homo-oder Copolymere, vorzugsweise auf Ethylen- und/oder Propylen-Homo-oder Copolymere, Homo-oder Copolyamide, Ethylen-Vinylalkohol-Copolymere und Polyvinylalkohole.

Zur Herstellung der Schicht (s) der erfindungsgemäßen Trennfolie kann vorzugsweise als thermoplastisches Olefin-Homo-oder Copolymeres wenigstens ein thermoplastisches Olefin-Homo-oder Copolymeres von α,ß-ungesättigten Olefinen mit vorzugsweise 2-6 Kohlenstoffatomen eingesetzt werden, besonders bevorzugt kann die Schicht (s) auf wenigstens einem Ethylen-Homo- oder Copolymeren (PE, insbesondere LDPE oder HDPE), Propylen-Homo- oder Copolymeren (PP), Butylen-Homo- oder Copolymeren (PB), Isobutylen-Homo- oder Copolymeren (PI) oder auf Mischungen aus wenigstens zwei der genannten Polymeren basieren.

Mit "LDPE" wird unverschäumtes Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird unverschäumtes Polyethylen hoher Dichte bezeichnet, welches nur eine geringe Verzweigung der Molekülkette aufweist, wobei die Dichte im Bereich zwischen 0,94 und 0,97 g/cm³ liegt.

Zur Herstellung der Schicht (s) geeignete Ethylen-Vinylalkohol-Copolymere (EVOH) werden durch im Wesentlichen vollständige Hydrolyse von entsprechenden ethylenhaltigen Polyvinylacetaten (EVAc) erhalten. Diese vollverseiften Ethylen-Vinylacetat-Copolymere weisen einen Verseifungsgrad ≥ 98 % und einen EthylenAnteil von 0,01-80 mol-%, vorzugsweise von 1-50 mol-% auf.

Die Schicht (s) kann auch auf wenigstens einem Polyvinylalkohol basieren, der durch eine im Wesentlichen vollständige Hydrolyse von Polyvinylacetaten (PVA) gewonnen wurde und als vollverseiftes Polyvinylacetat einen Verseifungsgrad ≥ 98 % aufweist.

In der erfindungsgemäßen Trennfolie beruht die Schaumstruktur auf expandierten, mindestens in der Schicht (s) verteilten, hohlen Mikroteilchen, deren Wand (= Schale) auf einem thermoplastischen Polymeren, bevorzugt auf einem (Meth)acrylnitril-Homo- oder Copolymer basiert, deren Expansion mit Hilfe wenigstens einer leicht flüchtigen, organischen Verbindung, vorzugsweise einem leicht flüchtigen Kohlenwasserstoff, erzielt wurde. Die leicht flüchtige organische Verbindung weist vorzugsweise einen Siedepunkt ≤ 60°C bei Normaldruck, besonders bevorzugt ≤ 50°C bei Normaldruck auf. Die hohlen, expandierten Mikroteilchen sind vorzugsweise kugelförmig, und haben einen Durchmesser von 30 µm bis 300 µm, bevorzugt von 70 µm bis 200 µm. Vor der Expansion weisen die in ihren Hohlraum mit wenigstens einer leicht flüchtigen Verbindung gefüllten Mikroteilchen einen durchschnittlichen Durchmesser von 15 µm bis 30 µm auf. Vorzugsweise weist das thermoplastische Polymere der Schicht (s) einen niedrigeren Schmelzpunkt auf als das thermoplastische Polymere aus dem die Wand (= Schale) der hohlen Mikroteilchen hergestellt wurde.

Zur Herstellung der Schaumstruktur der Schicht (s) werden in der Schicht (s) der erfindungsgemäßen Trennfolie vorzugsweise 0,1-10 Gew.-%, besonders bevorzugt 0,2-5 Gew.-%, jeweils bezogen auf das Gesamtgewicht der Schicht (s), der Mikroteilchen verteilt, die die leicht flüchtige, organische Verbindung enthalten.

Durch Wärmeeinwirkung bei der Herstellung der Schicht (s) erfolgt die Expansion der Mikroteilchen durch Verdampfung der leicht flüchtigen, organischen Verbindung. Vorzugsweise ist der Durchmesser der expandierten Mikroteilchen grösser als die Gesamtdicke der erfindungsgemäßen Trennfolie.

Vorzugsweise weist die Schicht (s) eine Dichte von 0,2 bis 1,2 g/cm³, vorzugsweise von 0,5 bis 1,0 g/cm³ auf.

Zur Herstellung der Releaseschicht (b) der erfindungsgemäßen Trennfolie eignen sich aushärtbare Polysiloxane.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das erfindungsgemäße ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das erfindungsgemäße Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die Releaseschicht (b) basiert vorzugsweise auf wenigstens einem ausgehärteten, d.h. vernetzten Polysiloxan ausgewählt aus der Gruppe umfassend additionsvemetzte, vorzugsweise metallkatalysiert additionsvemetzte, kondensationsvemetzte, radikalisch vernetzte, kationisch vernetzte und durch Feuchtigkeitseinwirkung vernetzte Polysiloxane.

Vorzugsweise basiert die Releaseschicht (b) auf wenigstens einem ausgehärteten Polysiloxan, das durch thermische Aushärtung, durch Aushärtung mit elektromagnetischer Strahlung, vorzugsweise durch UV-Strahlung, oder durch Feuchtigkeitseinwirkung ausgehärtet wurde.

Thermisch ausgehärtete Polysiloxane werden durch thermische Hydrosilylierung von Silan-Funktionen aufweisenden Polysiloxanen mit einer zumindest eine Kohlenstoff-Doppelbindung aufweisenden Verbindung erhalten. Bei den durch elektromagnetische Strahlung ausgehärteten Polysiloxanen ist die die Vernetzung der Polysiloxane durch elektromagnetische Strahlung, vorzugsweise durch UV-Strahlung, erfolgt. Die durch Einwirkung von Feuchtigkeit, vorzugsweise von Wasser, vernetzten Polysiloxanen werden durch eine Polykondensationsreaktion erhalten, bei der wenigstens eine Silan-Funktion und wenigstens eine Alkoxy-Gruppe oder wenigstens eine Alkoxysilan-Gruppe unter Abspaltung wenigstens eines Moleküls Alkohol eine Si-O-Bindung ausbilden. Die auszuhärtenden Polysiloxane weisen daher jeweils die für die Vernetzung benötigten miteinander reagierenden funktionellen Gruppen auf.

Vorzugsweise enthält die Releaseschicht (b) wenigstens ein Verlaufshilfsmittel und/oder wenigstens ein Verankerungshilfsmittel.

In einer bevorzugten Ausführungsform enthält die Releaseschicht (b) das Verlaufshilfsmittel in einer Menge von 1-10 Gew.-% und/oder das Verankerungshilfsmittel in einer Menge von 1-5 Gew.-%, jeweils bezogen auf das Gesamtgewicht der Releaseschicht (b).

Als Verlaufshilfsmittel zur Herstellung der Releaseschicht (b) geeignet ist wenigstens ein Polysiloxan, welche wenigstens eine, vorzugsweise endständige, funktionelle Gruppe mit zumindest einer Kohlenstoff-Doppelbindung, vorzugsweise wenigstens eine Vinyl-Gruppe, Allyl-Gruppe, (Meth)acrylsäure-Gruppe und/oder (Meth)acrylsäurederivat-Gruppe, aufweist. Dem Fachmann ist hierbei klar, dass die zur Vernetzung eingesetzte(n) funktionelle(n) Gruppe(n) des als Verlaufshilfsmittel eingesetzten Polysiloxans nach der Aushärtung des Polysiloxans in einer modifizierten, d.h. umgesetzten Form vorliegt (vorliegen).

Als Verankerungshilfsmittel zur Herstellung der Releaseschicht (b) geeignet ist wenigstens ein Polysiloxan, welche wenigstens eine, vorzugsweise endständige, funktionelle Gruppe mit zumindest eine Kohlenstoff-Doppelbindung aufweisende funktionelle Gruppe, vorzugsweise wenigstens eine Vinyl-Gruppe, Allyl-Gruppe, (Meth)acrylsäure-Gruppe und/oder (Meth)acrylsäurederivat-Gruppe, besonders bevorzugt wenigstens eine (Meth)acrylsäureester-Gruppe, wenigstens eine Epoxid-Gruppe, Isocyanat-Gruppe, Hydroxyl-Gruppe, Amin-Gruppe, Amid-Gruppe, CarboxylGruppe, Säureanhydrid-Gruppe, Alkoxy-Gruppe, Silan-Gruppe (Si-H-Gruppen), Alkoxysilan-Gruppe, besonders bevorzugt wenigstens eine Monoalkoxysilan-, Dialkoxysilan- und/oder Trialkoxysilan-Gruppe, aufweist. Besonders bevorzugt als Verankerungshilfsmittel zur Herstellung der Releaseschicht (b) geeignet ist wenigstens ein Polysiloxan mit wenigstens einer, vorzugsweise endständige, funktionelle Gruppe ausgewählt aus der Gruppe umfassend Epoxid-Gruppen, (Meth)acrylsäure-Gruppen und (Meth)acrylsäurederivat-Gruppen, besonders bevorzugt (Meth)acrylsäureester-Gruppen, aufweist. Dem Fachmann ist hierbei klar, dass die zur Vernetzung eingesetzte(n) funktionelle(n) Gruppe(n) des als Verankerungshilfsmittel eingesetzten Polysiloxans nach der Aushärtung des Polysiloxans in einer modifizierten, d.h. umgesetzten Form vorliegt (vorlieben).

Die Releaseschicht (b) der erfindungsgemäßen Trennfolie weist vorzugsweise eine Schichtdicke von ≤ 5 µm, besonders bevorzugt von ≤ 2 µm, ganz besonders bevorzugt von 0,3 µm bis 1,5 µm auf.

Vorzugsweise weist die erfindungsgemäße Trennfolie auf wenigstens einer ihren Oberflächen eine Releaseschicht (b) auf, besonders bevorzugt auf einer Oberfläche der Schicht (s), d. h. an die Schicht (s) unmittelbar angrenzend.

Die erfindungsgemäße Trennfolie weist vorzugsweise wenigstens eine nicht verschäumte Schicht (a) basierend auf wenigstens einem thermoplastischen Polymer, vorzugsweise auf wenigstens einem thermoplastischen Olefin-Homo-oder Copolymeren auf, besonders bevorzugt als Trägerschicht der erfindungsgemäßen Trennfolie auf.

Zur Herstellung der Schicht (a) eignen sich dieselben vorstehend genannten Olefin-Homo-oder Copolymere, die auch zur Herstellung der Schicht (s) eingesetzt werden können.

Ganz besonders bevorzugt basiert die Schicht (a) auf wenigstens einem Propylen-Homo oder Copolymeren.

Die Schichtdicke der Schicht (a) der erfindungsgemäßen Trennfolie beträgt vorzugsweise 5 bis 30 µm, besonders bevorzugt 6 bis 15 µm.

In einer weiteren bevorzugten Ausführungsform kann die Schicht (a) der erfindungsgemäßen Trennfolie direkt mit wenigstens einer weiteren nicht verschäumten Schicht (c) vorzugsweise basierend auf wenigstens einem Olefin-Homo-oder Copolymeren, verbunden sein.

Zur Herstellung der Schicht (c) eignen vorzugsweise sich dieselben vorstehend genannten Olefin-Homo-oder Copolymeren, die auch zur Herstellung der Schicht (a) bzw. Schicht (s) eingesetzt werden können.

Ganz besonders bevorzugt basiert die Schicht (c) auf wenigstens einem Propylen-Homo oder Copolymeren.

Als Außenschicht kann die jeweils nicht belegte Oberfläche der Schicht (c) bzw. der Schicht (a) bzw. der Schicht (s) ggf. mit einer weiteren Releaseschicht (b) ausgerüstet sein.

Die Schichtdicke der Schicht (c) der erfindungsgemäßen Trennfolie beträgt vorzugsweise 5 bis 30 µm, besonders bevorzugt 6 bis 15 µm.

In einer weiteren bevorzugten Ausführungsform kann der Schichtverbund aus Schicht (s), der Schicht (a) und Schicht (c) der erfindungsgemäßen Trennfolie mit der freien Oberfläche der Schicht (c), mit einer weiteren, nicht verschäumten Schicht (d) vorzugsweise basierend auf wenigstens einem Olefin-Homo-oder Copolymeren, verbunden sein.

Zur Herstellung der Schicht (d) eignen sich vorzugsweise dieselben vorstehend genannten Olefin-Homo-oder Copolymeren, die auch zur Herstellung der Schichten (s) bzw. (a) bzw. (c) eingesetzt werden können.

Ganz besonders bevorzugt basiert die Schicht (d) als Außenschicht auf wenigstens einem Propylen-Homo oder Copolymeren.

Bei einem solchen Schichtverbund können die freie Oberfläche der Schicht (d) bzw. der Schicht (s) jeweils als Außenschicht oder jeweils nur eine freie Oberfläche des Schichtverbunds vorzugsweise die Oberfläche der Schicht (s) mit einer Releaseschicht (b) ausgerüstet werden.

Die Schichtdicke der Schicht (d) der erfindungsgemäßen Trennfolie beträgt vorzugsweise 5 bis 30 µm, besonders bevorzugt 6 bis 15 µm.

Die erfindungsgemäße Trennfolie kann gegebenenfalls eine vorzugsweise zwischen der Schicht (a) und der Schicht (c) oder zwischen der Schicht (c) und der Schicht (d) angeordnete Barriereschicht (e) aufweisen.

Die Barriereschicht (e) kann auch unmittelbar bzw. ggf. über eine Haftvermittlerschicht (f) mit der Schicht (s) verbunden sein.

Vorzugsweise ist diese Barriereschicht (e) eine Gasbarriereschicht, besonders bevorzugt eine Sauerstoffbarriereschicht und/oder eine Wasserdampfbarriereschicht, oder eine Ölbarriereschicht.

Vorzugsweise basiert die Barriereschicht (e) auf wenigstens einem Ethylen-Vinylalkohol-Copolymer, wenigstens einem Polyvinylalkohol oder wenigstens einem Homo- oder Copolyamid, besonders bevorzugt auf wenigstens einem Homo- oder Copolyamid.

Zur Herstellung der Barriereschicht (e) eignen sich dieselben vorstehend genannten Ethylen-Vinylalkohol-Copolymere bzw. Polyvinylalkohole, die auch zur Herstellung der Schicht (s) eingesetzt werden können.

Als Homo- oder Copolyamide eignen sich vorzugsweise thermoplastische aliphatische, teilaromatische oder aromatische Homo-oder Copolyamide.

Diese Homo-oder Copolymamide können aus Diaminen wie aliphatischen Diaminen mit 2-10 Kohlenstoffatomen, insbesondere Hexamethylendiamin und/oder aromatischen Diaminen mit 6-10 Kohlenstoffatomen, insbesondere p-Phenylendiamin und aus Dicarbonsäuren aliphatische oder aromatische Dicarbonsäuren mit 6-14 Kohlenstoffatomen wie z.B. Adipinsäure, Terephthalsäure oder Isophthalsäure hergestellt werden. Weiterhin können Homo- oder Copolyamide aus Lactamen mit 4-10 Kohlenstoffatomen wie z.B. aus ε-Caprolactam hergestellt werden. Erfindungsgemäß zum Einsatz kommende Polyamide sind vorzugsweise PA 6, PA 12, PA 66, PA 6I, PA 6T oder entsprechende Co-Polymere oder Mischungen aus wenigstens zwei der genannten Polyamide.

Die Barriereschicht (e) der erfindungsgemäßen Trennfolie weist vorzugsweise eine Schichtdicke von 3 µm bis 25 µm, bevorzugt von 5 µm bis 15 µm, auf.

In einer bevorzugten Ausführungsform weist die erfindungsgemäßen Trennfolie wenigstens eine zwischen der Schicht (s) und der Schicht (a) bzw. zwischen der Schicht (a) und der Schicht (c) angeordnete Barriereschicht (e) auf, welche ggf. jeweils über eine Haftvermittlerschicht (f) und/oder (g) mit den angrenzenden Schichten verbunden ist.

Als Haftvermittler können übliche Haftvermittler eingesetzt werden. Vorzugsweise basieren die Haftvermittlerschichten (f) und (g) jeweils unabhängig voneinander auf wenigstens einem modifizierten thermoplastischen Polymer, vorzugsweise auf wenigstens einem modifizierten Polyolefin-Homo- oder Copolymeren, besonders bevorzugt auf wenigstens einem modifizierten Propylen-Homo- oder Copolymeren, welches mit wenigstens einer organischen Säure oder wenigstens einem organischen Säureanhydrid, vorzugsweise mit Maleinsäureanhydrid modifiziert ist.

Die Haftvermittlerschichten (f) und (g) der erfindungsgemäßen Trennfolie weisen vorzugsweise jeweils unabhängig voneinander eine Schichtdicke von 1 µm bis 10 µm, besonders bevorzugt von 2 µm bis 8 µm, auf.

In einer weiteren Ausführungsform kann auch wenigstens eine Schicht (a) und/oder Schicht (c) und/oder Schicht (d) und/oder die Barriereschicht (e) und/oder wenigstens eine der Haftvermittlerschichten (f) und/oder (g) die Schicht (s), vorzugsweise nur eine Schicht (a) haben oder die Schicht (s) die vorstehend beschriebene Schaumstruktur aufweisen.

In einer ganz bevorzugten Ausführungsform weist die erfindungsgemäße Trennfolie eine Barriereschicht (e) basierend auf wenigstens einem Homo- oder Copolyamid auf, welche jeweils über eine Haftvermittlerschicht (f) und (g) mit der Schicht (s) bzw. der keine Schaumstruktur aufweisenden Schicht (a) verbunden ist, die jeweils auf einem Propylen Homo-oder Copolymer basieren, wobei wenigstens eine freie Oberfläche der Trennfolie mit einer Releaseschicht (b) ausgerüstet ist.

In einer weiteren bevorzugten Ausführungsform weist die erfindungsgemäße Trennfolie keine Barriereschicht (e) auf.

In einer anderen bevorzugten Ausführungsform weist die erfindungsgemäße Trennfolie eine die Schaumstruktur aufweisende Schicht (s) auf, welche mit einer keine Schaumstruktur aufweisenden Schicht (a) verbunden ist, die wiederum mit einer keine Schaumstruktur aufweisenden Schicht (c) verbunden ist, wobei die Schichten (s), (a) und (c) jeweils auf einem Propylen Homo-oder Copolymer basieren, wobei wenigstens eine freie Oberfläche der Trennfolie mit einer Releaseschicht (b) ausgerüstet ist.

Die Releaseschicht (b), ggf. die Schichten (s), (a), (c) und/oder (d), ggf. die Barriereschicht (e) und/oder ggf. die Haftvermittlerschichten (f) und/oder (g) können, wenn notwendig, jeweils unabhängig voneinander mit Additiven ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein. Dabei muss die Trennwirkung der Releaseschicht (b) erhalten bleiben.

Die Releaseschicht (b), ggf. die Schichten (s). (a) und/oder (c) und/oder (d), ggf. die Barriereschicht (e) und/oder ggf. die Haftvermittlerschichten (f) und/oder (g) können jeweils unabhängig voneinander, und ggf. als Schicht (s), wenigstens 0,01-30 Gew.-%, vorzugsweise wenigstens 0,1-20 Gew.-%, jeweils bezogen auf das Gesamtgewicht einer einzelnen Schicht, wenigstens einen der vorstehend genannten Additive enthalten.

Vorzugsweise ist die Gesamtschichtdicke der erfindungsgemäßen Trennfolie ≤ 100 µm.

Ein weiterer Gegenstand der vorliegenden Erfindung ist ein Verfahren zur Herstellung der erfindungsgemäßen Trennfolie.

In einer bevorzugten Ausführungsform kann die Schicht (s), und ggf. die übrigen Schichten der erfindungsgemäßen Trennfolie als gesamte mehrschichtige Folie in Form einer Schlauchfolie produziert und verarbeitet werden.

In einer anderen bevorzugten Ausführungsform kann die Schicht (s) und ggf. die übrigen Schichten der erfindungsgemäßen Trennfolie insgesamt als eine Cast-Mehrschichtfolie produziert und verarbeitet werden.

Dementsprechend kann die Herstellung der einzelnen Schichten (s) und ggf. (a), (c), (d), (e), (f) und (g) der erfindungsgemäßen Trennfolie vorzugsweise durch Co-Extrusion erfolgen.

Die Schaumstruktur der Schicht (s) wird mit Hilfe von in der Schicht (s) verteilten, hohlen Mikroteilchen, deren Schale aus einem thermoplastischen Polymer besteht und deren Füllung wenigstens eine leicht flüchtige, organische Verbindung ist. Zur Ausbildung der Schaumstruktur werden die noch nicht expandierten Mikroteilchen in Form eines Masterbatches in das zu verschäumende, geschmolzene Polymere unter Wärmezufuhr, vorzugsweise bei einer Temperatur von 180 bis 240°C, eingearbeitet, wobei die Expansion der Mikroteilchen durch Expansion (Verflüchtigung) der darin enthaltenen, leicht flüchtigen, organischen Verbindungen eintritt. Bei beispielsweise einer Einarbeitung im Extruder liegen nach dem Austritt aus der Extruderdüse diese expandierten Mikroteilchen im Polymermaterial verteilt vor und ergeben so die Schaumstruktur.

Die Schicht (s) oder ein Schichtverbund enthaltend wenigstens eine Schicht (s), d.h. z.B. ein Schichtverbund enthaltend eine Schicht (s) und eine Schicht (a) oder wenigstens eine Schicht (s), eine Schicht (a) und eine Schicht (c) und ggf. eine Schicht (d) kann auf einer oder auf beiden Oberflächen, d.h. einseitig oder beidseitig vorzugsweise nur einseitig, mit einer Mischung aus wenigstens einem nicht ausgehärteten Polysiloxan und ggf. wenigstens einem Verlaufshilfsmittel und/oder wenigstens einem Verankerungshilfsmittel sowie ggf. wenigstens einem vorstehend genannten Additiv beschichtet werden, und diese Mischung durch Einwirkung von Wärme oder von elektromagnetischer Strahlung oder durch Feuchtigkeit, ggf. durch Zusatz wenigstens eines UV-Initiators und/oder eines Radikalstarters in die Mischung, zur Releaseschicht (b) ausgehärtet und mit der Schicht (s) oder einer der Schichten der vorstehend genannten Schichtverbunde verbunden werden. Dadurch, dass die Schicht (s) eine Schaumstruktur aufweist, wird vorteilhafterweise eine feste Verankerung der Releaseschicht (b) auf der durch die Schaumstruktur strukturierten, unebenen, rauhen Oberfläche der Schicht (s) erreicht. In Folge dessen ist eine Prägung wie bei der Herstellung bekannter Trennfolien mit glatter Oberfläche der Releaseschicht nicht erforderlich. Dadurch können auch die Nachteile von Trennfolien mit Prägestruktur wie deren geringere Stabilität bei thermischer und mechanischer Belastung z.B. unter Druckeinwirkung, und die daraus resultierende, zumindest an den geschädigten Stellen, ungenügenden Trennwirkung vermieden werden.

Die jeweiligen Herstellungsverfahren und entsprechende Produktionsparameter sind dem Fachmann allgemein bekannt.

Jede der Schichten (a), (c), (d), (e), (f) und (g) der erfindungsgemäßen Trennfolie kann, wie ggf. auch die Schicht (s), einer Oberflächen-Behandlung wie z.B. einer Corona-Behandlung, einer Plasma-Behandlung und/oder einer Flamm-Behandlung unterworfen werden, vorzugsweise vor dem Aufbringen einer Releaseschicht (b), wobei besonders bevorzugt eine Corona-Behandlung durchgeführt wird.

Die erfindungsgemäße Trennfolie kann vorzugsweise bedruckt und/oder eingefärbt sein.

Wie bereits erwähnt, weist die erfindungsgemäße Trennfolie keine Prägestruktur-Ausrüstung auf.

Die erfindungsgemäße Trennfolie wird vorzugsweise als entfembare Schutzfolie oder Abdeckfolie vorzugsweise für bereits bei Umgebungstemperatur eine große Klebkraft aufweisende Produkte.

Ein weiterer Gegenstand der vorliegenden Erfindung ist daher die Verwendung der erfindungsgemäßen Trennfolie als entfernbare Schutz- oder Abdeckfolie, vorzugsweise für Selbstklebeetiketten, Klebebänder, Aufkleber oder selbstklebende Dachbahnen, vorzugsweise für selbstklebende Bitumen-Dachbahnen.

Die erfindungsgemäße Trennfolie wird vorzugsweise bei der Herstellung von aufrollbaren, selbstklebenden Dachbahnen, vorzugsweise von aufrollbaren, selbstklebenden Bitumen-Dachbahnen als entfembare Schutz- oder Abdeckfolie mitverarbeitet.

Ein weiterer Gegenstand der vorliegenden Erfindung ist daher eine aufrollbare, selbstklebende Dachbahn versehen mit einer Trennfolie als entfembare Schutz- oder Abdeckfolie.

Ein weiterer Gegenstand der vorliegenden Erfindung ist eine aufgerollte, selbstklebende Bitumen-Dachbahn versehen mit einer Trennfolie als entfembare Schutz- oder Abdeckfolie.

### Bestimmung der Trennkraft (Trennwirkung)

Die Trennwirkung der erfindungsgemäßen Trennfolie gegen einen Klebstoff wird durch die Trennkraft in [cN/cm] angegeben, die zum Trennen, d.h. Entfernen der Trennfolie vom Klebstoff erforderlich ist.

Auf eine Probe der erfindungsgemäßen Trennfolie oder einer Vergleichsfolie, für die die Trennkraft ermittelt werden soll, wird hierbei über ihre gesamte Breite blasenfrei ein Testklebeband aufgeklebt. Als Testklebebänder werden Tesafix A 7475 und Tesafix K 7476 verwendet, die jeweils eine Breite von 25 mm aufweisen. Die Probe wird so zugeschnitten, dass längsseitig vom jeweiligen Testklebeband jeweils ein Rand von 2 cm an Trennfolie verbleibt, der nicht mit dem Testklebeband versehen ist. Die Probe wird in mehrere jeweils ca. 30 cm-lange Streifen geschnitten. Anschließend werden die Proben-Streifen zwischen dünne Blechplatten gelegt und mit Gewichten beschwert, wobei die Proben-Streifen zwischen den Platten so verteilt r sein müssen, dass alle Proben-Streifen gleichmäßig belastet werden (Belastung der Proben-Streifen: 6,8 kp bzw. 70 g/cm²). Danach werden die Proben-Streifen über den Zeitraum von 20 h bei 70°C (Proben-Streifen mit Tesafix A 7475) bzw. 40°C (Proben-Streifen mit Tesafix K 7476) im Trockenschrank gelagert. Anschließend wird die nicht das Testklebeband aufweisende Seite des Probenstreifens mittels eines Doppelklebebands in eine Metallschiene (350 x 40 mm) eines elektronischen Zerreißgeräts eingebracht, die mit einer unteren Spannklemme fixiert wird. Ein steifer, ca. 400 mm langer Folienstreifen wird am Testklebeband des Probenstreifens befestigt und mittels einer oberen Spannklemme im Zerreißgerät fixiert. Das Testklebeband wird nun unter einem Winkel von annähernd 180° mit einer Abzugsgeschwindigkeit von bis zu 1800 mm/min abgezogen und zur Ermittlung der Trennkraft ein Kraftdiagramm aufgezeichnet. Es wird jeweils ein Mittelwert aus 3 Messungen ermittelt.

### High-Temperature-Bitumen-Test (HTB-Test)

Der HTB-Test dient zur Bestimmung der maximalen Temperatur, bei der sich die Trennfolie noch von einem Klebstoff ablösen lässt. Als Klebstoff wurde Bitumen verwendet.

Eine auf Bitumen aufgeklebte Probe der erfindungsgemäße Trennfolie oder Vergleichsfolie wird auf zwei Stahlplatten am Boden eines Trockenschranks gelegt und die Probe bei einer Temperatur von mindestens 90°C solange getempert, bis ein Thermometer, dessen Temperatur-Messfühler im hinteren Bereich der Probe zwischen Trennfolie und Bitumen leicht in das Bitumen eingedrückt worden ist, eine konstante Temperatur anzeigt und die Trennfolie nicht mehr vom Bitumen zu trennen ist. Anschließend wird der Trockenschrank ausgeschaltet. Bei geöffneter Tür fällt nun die Temperatur der Probe langsam ab. Durch gleichmäßiges Ziehen an der Trennfolie der Probe wird beurteilt, ob eine Trennung vom Bitumen möglich ist. Die HTB-Temperatur ist diejenige Temperatur, bei der sich die Trennfolie der Probe rückstandsfrei vom Bitumen der Probe ablösen lässt.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| Inspire 137: | Propylen-Copolymer der Firma Dow |
| Bormod 904 : | Propylen-Homopolymer der Firma Borealis |
| Durethan C38F: | Copolyamid der Firma Lanxess |
| Durethan B40FAM: | Polyamid PA6 der Firma Lanxess |
| Lucofin 1400HN: | Ethylen-Butylacrylat-Copolymer der Firma Lucobit |
| Admer QB520E: | Haftvermittler der Firma Mitsui |
| Luvofilm 9679: | Gleitmittel |
| Advancel EMS-024: | Hohle, kugelförmige, mit leicht flüchtigen Kohlenwasserstoffen gefüllte Mikroteilchen der Firma Sekisui |
| Polybatch UVS210: | UV-Stabilisator |
| Polybatch P8555: | in Polypropylen dispergiertes Titan(IV)dioxid (50% TiO₂) der Firma Schulman |
| Multibatch MP 52659: | Antiblockmittel |
| Remafin RCL: | Farb-Batch (weiß) |
| Polyblack P 7226: | Farb-Batch (schwarz) |
| L066: | Silikonöl der Firma Wacker (Verlaufshilfsmittel) |
| Anchorsil 2000 | Verankerungshilfsmittel der Firma Momentive |
| Polysiloxan: | Polysiloxan mit Vernetzer und Katalysator der Firma Wacker |

### II. Herstellung der Trennfolien

Die Trennfolien des Vergleichsbeispiels **(V)** sowie des Beispiels 3 **(B3)** bestehen jeweils aus sechs Schichten. Die Trennfolien der Beispiele **B1** und **B2** bestehen aus vier bzw. fünf Schichten. Die Trennfolien des Vergleichsbeispiels **(V)** sowie des Beispiels **(B3)** und weisen eine Gesamtschichtdicke von jeweils 26 µm auf. Die Trennfolien der Beispiele **B1** und **B2** weisen eine Gesamtschichtdicke von jeweils 23,5 µm bzw. 24,5 µm auf. Die einzelnen Schichten der Trennfolien grenzen jeweils in der Reihenfolge unmittelbar aneinander an, in der sie nachstehend aufgeführt sind. Die einzelnen Schichten (s), (a), (c), (e), (f) und (g) der Trennfolien der Beispiele B3 sowie von V wurden jeweils durch Blasfolien-Co-Extrusion hergestellt und in einem nachfolgenden Arbeitsgang jeweils mit einer Releaseschicht (b) beschichtet. Die einzelnen Schichten (s), (a), (c) und (d) der Trennfolien der Beispiele **B1** und B2 wurden jeweils durch Blasfolien-Co-Extrusion hergestellt und in einem nachfolgenden Arbeitsgang einseitig bzw. beidseitig mit einer Releaseschicht (b) beschichtet. Die Schaumstrukturen der Schicht (s) der Trennfolien der Beispiels B1-B3 beruht auf expandierten, in der Schicht (s) verteilten, hohlen Mikroteilchen. Die Trennfolie des Vergleichsbeispiels V weist dagegen keine Schaumstruktur auf, sondern ist mit einer Prägestruktur ausgerüstet. Die Prägestruktur beruht auf einem regelmäßigen, Krepp-papier-artigen Muster und weist eine Prägehöhe von 180 bis 240 µm auf. Die Prägung des Vergleichsbeispiels **V** ist nach einem üblichen, dem Fachmann bekannten Prägeverfahren, unter Verwendung einer Prägewalze erfolgt.

### III. Beispiele und Vergleichsbeispiel

Alle nachfolgenden %-Angaben sind jeweils Gew.-%.

### III.1 Beispiel 1

| ***Schichtaufbau B1*** | ***Rohstoffe B1*** |
|---|---|
| Releaseschicht (b) | Polysiloxan (92,8%), Anchorsil 2000 (2,6%), L066 (4,6%) |
| Schichtdicke (1,0 µm) | |
| Schicht (s) | Inspire 137 (98%), Luvofilm 9679 (0,5%) Advancel EMS-024 (0,5%) |
| (Schichtdicke 7,5 µm) | |
| Schicht (a) | Inspire 137 (86%), Polyblack P 7226 (14%) |
| (Schichtdicke 7,5 µm) | |
| Schicht (c) | Inspire 137 (89,5%), Luvofilm 9679 (0,5%) Remafin RCL (10%) |
| (Schichtdicke 7,5 µm) | |

### III.2 Beispiel 2

| *Schichtaufbau **B2*** | *Rohstoffe **B2*** |
|---|---|
| Releaseschicht (b) | Polysiloxan (92,8%), Anchorsil 2000 (2,6%), L066 (4,6%) |
| Schichtdicke (1,0 µm) | |
| Schicht (s) | Inspire 137 (98%), Luvofilm 9679 (0,5%) Advancel EMS-024 (0,5%) |
| (Schichtdicke 7,5 µm) | |
| Schicht (a) | Inspire 137 (86%), Polyblack P 7226 (14%) |
| (Schichtdicke 7,5 µm) | |
| Schicht (c) | Inspire 137 (89,5%), Luvofilm 9679 (0,5%) Remafin RCL (10%) |
| (Schichtdicke 7,5 µm) | |
| Releaseschicht (b) | Polysiloxan (92,8%), Anchorsil 2000 (2,6%), L066 (4,6%) |
| Schichtdicke (1,0 µm) | |

### III.3 Vergleichsbeispiel V und Beispiel B3:

| *Schichtaufbau (jeweils von V und **B3**)* | *Rohstoffe V* | *Rohstoffe **B3*** |
|---|---|---|
| Releaseschicht (b) | Polysiloxan (92,8%), Anchorsil 2000 (2,6%), L066 (4,6%) | Polysiloxan (92,8%), Anchorsil 2000 (2,6%), L066 (4,6%) |
| Schichtdicke (1,0 µm) | | |
| Schicht (s) | Inspire 137 (35%), Bormod 904 (47%), Luvofilm 9679 (0,5%) Polybatch P8555 (17,5%) nicht geschäumt | Inspire 137 (35%), Bormod 904 (47%), Luvofilm 9679 (0,5%), Advancel EMS-024 (0,5%) Polybatch P8555 (17,0%) (geschäumt) |
| (Schichtdicke 7,5 µm) | | |
| Haftvermittlerschicht (f) | Admer QB520E (50%), Inspire 137 (50%) | Admer QB520E (50%), Inspire 137 (50%) |
| (Schichtdicke 2,5 µm) | | |
| Barriereschicht (e) | Durethan C38F (70%), Durethan B40FAM (30%) | Durethan C38F (70%), Durethan B40FAM (30%) |
| (Schichtdicke 5,0 µm) | | |
| Haftvermittlerschicht (g) | Admer QB520E (50%), Inspire 137 (50%) | Admer QB520E (50%), Inspire 137 (50%) |
| (Schichtdicke 2,5 µm) | | |
| Schicht (c) | Inspire 137 (35%), Bormod 904 (52,5%), Luvofilm 9679 (0,5%), Polyblack P 7226 (12%) | Inspire 137 (35%), Bormod 904 (52,5%), Luvofilm 9679 (0,5%), Polyblack P 7226 (12%) |
| (Schichtdicke 7,5 µm) | | |

### IV. Bestimmung der Trennkraft und der HBT-Temperatur

Für die Trennfolien des Beispiels 3 **(B3)** sowie der geprägten Trennfolie des Vergleichsbeispiels **V** wurden jeweils nach den vorstehend beschriebenen Methoden die Trennkraft sowie die HBT-Temperatur ermittelt.

| Beispiel/ Vergleichsbeispiel | Trennkraft (cN/cm) | HBT-Temperatur (°C) |
|---|---|---|
| V | 5,7 | 64 |
| B3 | 4,1 | 77 |

## Patentansprüche

1. Eine Trennfolie umfassend wenigstens eine Schicht (s) mit einer geschlossenzelligen Schaumstruktur basierend auf wenigstens einem thermoplastischen Polymeren,
wobei die geschlossenzellige Schaumstruktur auf expandierten, hohlen Mikroteilchen beruht, deren Expansion durch wenigstens eine im Hohlraum der Mikroteilchen enthaltenen, leicht flüchtigen, organischen Verbindung erreicht wurde,
wobei die expandierten, hohlen Mikroteilchen einen Durchmesser von 30 µm bis 300 µm aufweisen,
wobei zumindest eine der Oberflächen der Trennfolie mit einer Releaseschicht (b) als Außenschicht basierend auf wenigstens einem ausgehärteten Polysiloxan ausgerüstet ist, und
wobei das thermoplastische Polymere der Schicht (s) einen niedrigeren Schmelzpunkt als das thermoplastische Polymere hat, auf dem die Wand der Mikroteilchen basiert.

2. Eine Trennfolie nach Anspruch 1, **dadurch gekennzeichnet, dass** die expandierten, hohlen Mikroteilchen einen Durchmesser von 70 bis 200 µm aufweisen.

3. Eine Trennfolie nach Anspruch 1 oder 2, **dadurch gekennzeichnet, dass** der durchschnittliche Durchmesser der expandierten Mikroteilchen größer als die Gesamtdicke der Trennfolie ist.

4. Eine Trennfolie nach einem der Ansprüche 1 bis 3, **dadurch gekennzeichnet, dass** die Schicht (s) eine Gesamtdichte von 0,2 bis 1,2 g/cm³, vorzugsweise von 0,5 bis 1,0 g/cm³, aufweist.

5. Eine Trennfolie nach einem der Ansprüche 1 bis 4, **dadurch gekennzeichnet, dass** die Releaseschicht (b) wenigstens ein Verlaufshilfsmittel und/oder wenigstens ein Verankerungshilfsmittel enthält.

6. Eine Trennfolie nach Anspruch 5, **dadurch gekennzeichnet, dass** als Verlaufshilfsmittel wenigstens ein Polysiloxan mit wenigstens einer, vorzugsweise endständigen, funktionellen Gruppe, vorzugsweise einer wenigstens eine Kohlenstoff-Doppelbindung aufweisende funktionelle Gruppe eingesetzt wurde.

7. Eine Trennfolie nach Anspruch 6, **dadurch gekennzeichnet, dass** als Verankerungshilfsmittel wenigstens ein Polysiloxan mit wenigstens einer, vorzugsweise endständigen, funktionellen Gruppe ausgewählt aus der Gruppe umfassend eine wenigstens eine Kohlenstoff-Doppelbindung aufweisende funktionelle Gruppe, Epoxid-Gruppe, eine Isocyanat-Gruppe, Hydroxy-Gruppe, eine Alkoxysilan-Gruppe und eine Silan-Gruppe eingesetzt wurde.

8. Eine Trennfolie nach einem der Ansprüche 5 bis 7, **dadurch gekennzeichnet, dass** das Verlaufshilfsmittel in einer Menge von 1-10 Gew.-% und/oder das Verankerungshilfsmittel in einer Menge von 1-5 Gew.-% jeweils bezogen auf das Gesamtgewicht der Releaseschicht (b) in der Releaseschicht (b) enthalten ist.

9. Eine Trennfolie nach einem der Ansprüche 1 bis 8, **dadurch gekennzeichnet, dass** die Schicht (s) auf wenigstens einem Olefin-Homo- oder Copolymeren, vorzugsweise einem Propylen-Homo- und/oder Copolymeren basiert, die vorzugsweise auf wenigstens einer ihrer Oberfläche die Releaseschicht (b) als Außenschicht der Trennfolie aufweist.

10. Eine Trennfolie nach Anspruch 9, **dadurch gekennzeichnet, dass** die Schicht (s) mit ihrer freien Oberfläche mit wenigstens einer keine Schaumstruktur aufweisenden Schicht (a) basierend auf wenigstens einem Olefin-Homo- oder Copolymeren, vorzugsweise einem Propylen-Homo- und/oder Copolymeren, verbunden ist.

11. Eine Trennfolie nach Anspruch 10, **dadurch gekennzeichnet, dass** die Schicht (a) direkt mit wenigstens einer weiteren nicht verschäumten Schicht (c) verbunden ist.

12. Eine Trennfolie nach Anspruch 11, **dadurch gekennzeichnet, dass** die Schicht (c) mit ihrer freien Oberfläche mit wenigstens einer weiteren keine Schaumstruktur aufweisenden Schicht (d), vorzugsweise basierend auf wenigstens einem Olefin-Homo- oder Copolymeren, verbunden ist.

13. Eine Trennfolie nach einem der Ansprüche 1 bis 12, **dadurch gekennzeichnet, dass** sie wenigstens eine zwischen der Schicht (a) und der Schicht (c) oder der Schicht (c) und der Schicht (d) angeordnete Barriereschicht (e), vorzugsweise basierend auf wenigstens einem Homo- oder Copolyamid, aufweist, welche ggf. jeweils über eine Haftvermittlerschicht (f) und/oder (g) mit der Schicht (a) bzw. der Schicht (c) bzw. der Schicht (d) verbunden ist.

14. Eine Verwendung einer Trennfolie nach einem der Ansprüche 1 bis 13 als entfernbare Schutz- oder Abdeckfolie, vorzugsweise für Selbstklebeetiketten, Klebebänder, Aufklebern oder selbstklebende Dachbahnen, besonders bevorzugt für selbstklebende Bitumen-Dachbahnen.

15. Eine aufrollbare, selbstklebende Dachbahn, vorzugsweise eine Bitumen-Dachbahn, versehen mit einer Trennfolie als entfembare Schutz- oder Abdeckfolie nach einem der Ansprüche 1 bis 13.

## Claims

1. A release film comprising at least one layer (s) with a closed-cell foam structure based on at least one thermoplastic polymer,
where the closed-cell foam structure is based on expanded, hollow microparticles, the expansion of which has been achieved by virtue of at least one volatile organic compound present in the cavity of the microparticles,
where the diameter of the expanded, hollow microparticles is from 30 µm to 300 µm,
where at least one of the surfaces of the release film has been equipped with a release layer (b) as external layer based on at least one cured polysiloxane, and
where the melting point of the thermoplastic polymer of the layer (s) is lower than that of the thermoplastic polymer on which the wall of the microparticles is based.

2. The release film as claimed in claim 1, **characterized in that** the diameter of the expanded, hollow microparticles is from 70 to 200 µm.

3. The release film as claimed in claim 1 or 2, **characterized in that** the average diameter of the expanded microparticles is greater than the overall thickness of the release film.

4. The release film as claimed in any of claims 1 to 3, **characterized in that** the overall density of the layer (s) is from 0.2 to 1.2 g/cm³, preferably from 0.5 to 1.0 g/cm³.

5. The release film as claimed in any of claims 1 to 4, **characterized in that** the release layer (b) comprises at least one leveling aid and/or at least one anchoring aid.

6. The release film as claimed in claim 5, **characterized in that** the leveling aid used comprised at least one polysiloxane having at least one, preferably terminal,
functional group, preferably one functional group having at least one carbon double bond.

7. The release film as claimed in claim 6, **characterized in that** the anchoring aid used comprised at least one polysiloxane having at least one, preferably terminal functional group selected from the group consisting of a functional group having at least one carbon double bond, epoxy group, isocyand group, hydroxy group, an alkoxysilane group and a silane group.

8. The release film as claimed in any of claims 5 to 7, **characterized in that**, in the release layer (b), the amount present of the leveling aid is from 1 to 10% by weight, and/or the amount present of the anchoring aid is from 1 to 5% by weight, based in each case on the total weight of the release layer (b).

9. The release film as claimed in any of claims 1 to 8, **characterized in that** the layer (s) is based on at least one
olefin homo- or copolymer, preferably one propylene homo- and/or copolymer, and preferably has, on at least one of its surfaces, the release layer (b) as external layer of the release film.

10. The release film as claimed in claim 9, **characterized in that** the free surface of the layer (s) has been bonded to at least one layer (a) which has no foam structure and which is based on at least one olefin homo- or copolymer, preferably one propylene homo- and/or copolymer.

11. The release film as claimed in claim 10, **characterized in that** the layer (a) is bonded directly to at least one further unfoamed layer (c).

12. The release film as claimed in claim 11, **characterized in that** the free surface of the layer (c) has been bonded to at least one other layer (d) which has no foam structure and which is based on at least one olefin homo- or copolymer.

13. The release film as claimed in any of claims 1 to 12, **characterized in that** it has at least one barrier layer (e), preferably based on a homo-or copolyamide, which has been arranged between the layer (a) and the layer (c) or the layer (c) and the layer (d), and which has optionally respectively been bonded by way of an adhesion-promoter layer (f) and/or (g) to the layer (a) or, respectively, the layer (c) or, respectively, the layer (d).

14. The use of a release film as claimed in any of claims 1 to 13 as removable protective film or removable protective-covering film, preferably for self-adhesive labels, adhesive tapes, stickers or self-adhesive roof sheeting, particularly preferably for self-adhesive bitumen roof sheeting.

15. A rollable, self-adhesive roof-sheeting material, preferably a bitumen roof sheeting, provided with a release film as claimed in any of claims 1 to 13 as removable protective film or as removable protective-covering film.

## Revendications

1. Feuille de séparation, comprenant au moins une couche (s) présentant une structure de mousse à cellules fermées à base d'au moins un polymère thermoplastique,
la structure de mousse à cellules fermées étant à base de microparticules creuses expansées, dont l'expansion a été obtenue par au moins un composé organique, volatil, contenu dans l'espace creux des microparticules,
les microparticules creuses, expansées présentant un diamètre de 30 µm à 300 µm,
au moins une des surfaces de la feuille de séparation étant apprêtée avec une couche antiadhésive (b) comme couche externe à base d'au moins un polysiloxane durci, et
le polymère thermoplastique de la couche (s) présentant un point d'ébullition inférieur à celui du polymère thermoplastique sur lequel la paroi des microparticules est basée.

2. Feuille de séparation selon la revendication 1, **caractérisée en ce que** les microparticules creuses, expansées présentent un diamètre de 70 µm à 200 µm.

3. Feuille de séparation selon la revendication 1 ou 2, **caractérisée en ce que** le diamètre moyen des microparticules expansées est supérieur à l'épaisseur totale de la feuille de séparation.

4. Feuille de séparation selon l'une quelconque des revendications 1 à 3, **caractérisée en ce que** la couche (s) présente une densité totale de 0,2 à 1,2 g/cm³, de préférence de 0,5 à 1,0 g/cm³.

5. Feuille de séparation selon l'une quelconque des revendications 1 à 4, **caractérisée en ce que** la couche antiadhésive (b) contient au moins un adjuvant d'étalement et/ou au moins un adjuvant d'ancrage.

6. Feuille de séparation selon la revendication 5, **caractérisée en ce qu'**on utilise, comme adjuvant d'étalement, au moins un polysiloxane présentant au moins un groupe fonctionnel, de préférence en position terminale, de préférence au moins un groupe fonctionnel présentant au moins une double liaison carbonée.

7. Feuille de séparation selon la revendication 6, **caractérisée en ce qu'**on a utilisé, comme adjuvant d'ancrage, au moins un polysiloxane présentant au moins un groupe fonctionnel, de préférence en position terminale, choisi dans le groupe comprenant un groupe fonctionnel présentant au moins une double liaison carbonée, un groupe époxyde, un groupe isocyanate, un groupe hydroxy, un groupe alcoxysilane et un groupe silane.

8. Feuille de séparation selon l'une quelconque des revendications 5 à 7, **caractérisée en ce que** l'adjuvant d'étalement est contenu dans la couche antiadhésive (b) en une quantité de 1-10 % en poids et/ou l'adjuvant d'ancrage est contenu en une quantité de 1-5 % en poids, à chaque fois par rapport au poids total de la couche antiadhésive (b).

9. Feuille de séparation selon l'une quelconque des revendications 1 à 8, **caractérisée en ce que** la couche (s) est à base d'au moins un homopolymère ou copolymère d'oléfines, de préférence un homopolymère et/ou un copolymère de propylène, qui présente de préférence sur au moins une de ses surfaces la couche antiadhésive (b) comme couche externe de la feuille de séparation.

10. Feuille de séparation selon la revendication 9, **caractérisée en ce que** la couche (s) est reliée par sa surface libre à au moins une couche (a) ne présentant pas de structure de mousse, à base d'au moins un homopolymère ou copolymère d'oléfines, de préférence un homopolymère et/ou un copolymère de propylène.

11. Feuille de séparation selon la revendication 10, **caractérisée en ce que** la couche (a) est directement reliée à une autre couche (c) non moussée.

12. Feuille de séparation selon la revendication 11, **caractérisée en ce que** la couche (c) est reliée par sa surface libre à au moins autre une couche (d) ne présentant pas de structure de mousse, de préférence à base d'au moins un homopolymère ou copolymère d'oléfine.

13. Feuille de séparation selon l'une quelconque des revendications 1 à 12, **caractérisée en ce qu'**elle présente au moins une couche (e) formant une barrière disposée entre la couche (a) et la couche (c) ou entre la couche (c) et la couche (d), de préférence à base d'au moins un homopolyamide ou copolyamide, qui est le cas échéant à chaque fois reliée via une couche autoadhésive (f) et/ou (g) à la couche (a) ou la couche (c) ou la couche (d).

14. Utilisation d'une feuille de séparation selon l'une quelconque des revendications 1 à 13 comme feuille de protection ou de recouvrement amovible, de préférence pour des étiquettes autoadhésives, des bandes adhésives, des autocollants ou des bandes de toiture autoadhésives, de manière particulièrement préférée pour des bandes de toiture autoadhésives en bitume.

15. Bande de toiture autoadhésive, pouvant être enroulée, de préférence bande de toiture en bitume, pourvue d'une feuille de séparation comme feuille de protection ou de recouvrement amovible selon l'une quelconque des revendications 1 à 13.
